# EUROPÄISCHE PATENTSCHRIFT

(11) **EP 0 792 672 B1**
(45) Veröffentlichungstag und Bekanntmachung des Hinweises auf die Patenterteilung: **10.07.2002**
(21) Anmeldenummer: 97103425.1
(22) Anmeldetag: 28.02.1997
(51) Int. Cl.: B01D 11/02, C08G 69/46, C08G 69/16, C08J 3/00, C08G 69/28, C08G 85/00

(54) **Verfahren und Vorrichtung zur kontinuierlichen Extraktion von polymeren Granulaten**
Process and apparatus for the continuous extraction of polymer granules
Procédé et appareillage pour l'extraction en continu de granulés de polymère

(30) Priorität: 29.02.1996 DE 19607723
(43) Veröffentlichungstag der Anmeldung: 03.09.1997
(73) Patentinhaber: POLYMER ENGINEERING GmbH, 07407 Rudolstadt (DE)
(72) Erfinder: Wiltzer, Karlheinz, 07422 Bad Blankenburg (DE); Beckmann, Jürgen, 07407 Rudolstadt (DE)
(74) Vertreter: Feldkamp, Rainer, Dipl.-Ing.

(56) Entgegenhaltungen:
- EP-A- 0 308 774
- DD-A- 200 145
- DD-A- 206 999
- DE-A- 2 242 641
- US-A- 3 374 207
- US-A- 4 002 430

## Beschreibung

Die Erfindung betrifft ein Verfahren und eine Vorrichtung zur Durchführung eines Verfahrens zur Verbesserung der kontinuierlichen Extraktion von polymeren Granulaten, insbesondere Polyamid 6-Granulat, wobei Wasser im Gegenstrom zum Granulat als Extraktionsmittel eingesetzt wird.

Es ist bekannt, polymere Granulate mittels verschiedener Extraktionsmittel und Verfahren kontinuierlich oder diskontinuierlich zur Erreichung eine geringen Restextraktgehaltes für die Weiterverarbeitung des Granulates zu extrahieren. Dazu wird Granulat, welches während des Extrahierens der löslichen Bestandteile, wie Oligomere und Monomere, mit dem Extraktionsmittel als Gemenge im Extraktor vorliegt, gemeinsam mit einem gleichmäßigen Restextraktgehalt ausgetragen. Günstige Ergebnisse werden dabei mit dem Extraktionsmittel Wasser erreicht, welches im Gegenstrom durch das im Extraktor von oben nach unten sinkende Granulat geschickt wird (DD-PS 200 145 und DD-PS 206 999), wobei allerdings hohe Verweilzeiten im Extraktor erforderlich werden oder relativ hohe Wassermengen eingesetzt werden müssen, um die löslichen Bestandteile auszutragen.

Es wird allgemein praktiziert, Förderwasser vermischt mit Extraktwasser aus dem Extraktor abzuleiten. Die Durchführung der Extraktion bei Temperaturen von 100 bis 150°C ist dabei energetisch aufwendig im Zusammenehang mit der Kühlung der Gesamtwassermenge.

Die Verwendung von überhitztem Wasserdampf als Extraktionsmittel im Gegenstrom (DE-OS 37 10 803) setzt die technisch schwer beherrschbare durchgängige Einhaltung einer stabilen Fahrweise für einen guten Erfolg voraus.

Bekannt ist auch, die Extraktion von polymeren Granulaten durch Einleiten von Granulat und Förderwasser nacheinander in getrennte Kammern vorzubereiten, wobei das Förderwasser jeweils überwiegend abgeleitet wird. Die Extraktion des aus den einzelnen Kammern mittels Schieber nacheinander in den Extraktionsraum gelangten Granulates erfolgt mittels Extraktwasser.

Auch wird zur Entfernung von Monomeren und anderen Verunreinigungen im Polyamidgranulat, Heißwasser in Verbindung mit Piperidin- oder Imidazolin-Derivaten eingesetzt (SU-PS 960 197).

Mit den üblicherweise eingesetzten Verfahren und Vorrichtungen für die kontinuierlche Extraktion von polymeren Granulaten unter Verwendung von Wasser im Gegenstrom wird relativ viel Wasser verbraucht, Temperaturdifferenzen und Unterschiede der Konzentrationsverhältnisse an Extrakt zwischen Förderwasser und Extraktwasser wirken durch direkte Vermischung nachteilig auf den Prozeßeablauf und vor allem wird hier bei der Extraktrückgewinnung in der Anlage eine erhebliche Energiemenge notwendig.

Die Erfindung bezweckt die Vermeidung der genannten Nachteile.

Es steht die Aufgabe, mit einem kontinuierlichen Extraktionsverfahren von polymeren Granulaten, insbesondere Polyamid 6-Granulat und einer Vorrichtung zur Durchführung des Verfahrens, bei welchem Wasser im Gegenstrom zum polymeren Granulat geleitet wird, den Wasserverbrauch erheblich zu verringern, die Endkonzentration an Extrakt im Wasser zu erhöhen, Granulat mit nur geringen Restanteilen an Dimeren und Monomeren herzustellen und bei Extraktionstemperaturen über 100°C Förderwasser mit einer Temperatur < 100°C aus dem Extraktor abzuleiten.

Diese Aufgabe wird durch die im Patentanspruch 1 bzw. 5 angegebenen Merkmale gelöst.

Vorteilhafte Ausgestaltungen und Weiterbildungen der Erfindung ergeben sich aus den Unteransprüchen.

Erfindungsgemäß werden das in einen Extraktor mit dem Granulat eingebrachte Förderwasser und das Extraktionswasser getrennt voneinander aus dem Extraktor abgeführt. Das wird erreicht, indem der Extraktor mittels einer Trenneinrichtung in einen Förderwasserraum und einen Extraktionswasserraum unterteit wird. Granulat-Wasser-Gemisch wird über den Eingangsstutzen in den Förderwasserraum des Extraktors eingebracht und das Förderwasser vom Granulat insbesondere durch Siebeinbauten getrennt und unter Einstellung eines Förderwasserniveaus im Förderwasserraum von dort über einen Förderwasser-Austragsstutzen abgeleitet. Das Granulat gelangt durch eine oder mehrere Öffnungen in der Trennvorrichtung am Grund von trichterförmigen Vertiefungen oder rohrartigen Gebilden in den Extraktionswasserraum. Dabei wird ein Granulatniveau eingestellt und gehalten.

Die Extraktion des Granulates wird im Gegenstromverfahren bei Temperaturen zwischen 98 und 160°C vorgenommen und das Extraktwasser nach dem Durchlauf separat über den Extraktwasser-Austragsstutzen ausgebracht. Die Trennung von Förderwasser und Extraktwasser wird erreicht, indem das innerhalb von Durchtrittsöffnungen in der Trennvorrichtung vorhandene Wasser und das an der Durchtrittsöffnung des Granulates im Granulataustragsstutzen des Extraktors anliegende Wasser strömungsfrei gehalten wird.

Dazu wird erfindungsgemäß am Austragsstutzen des Extraktors über eine Wassermengenregulierung, abhängig vom Wasserniveau im Förderwasserraum, zusätzlich Wasser präzise in der Menge eingespeist, daß dort aus dem Extraktor anliegendes Extraktwasser vor dem Strahlförderer zurückgehalten wird.

Im Zusammenhang mit der Minimierung des Wärmeaustausches innerhalb und über einer Öffnung, infolge der bestehenden Dichteunterschiede zwischen 'kaltem' Förderwasser und 'heißem' Extraktwasser und der Granulatdurchsatzmenge, wird die Durchtrittsöffnung oder die Summe der Querschnitte so dimensioniert, daß die Granulatpassiergeschwindigkeit zwischen 1/5 und 1/10 der Sinkgeschwindigkeit des Granulates in ruhendem Wasser gewählt wird. Die erfindungsgemäße Trennung von Förder- und Extraktwasser ermöglicht es, die Extraktion unter Druck bei Temperaturen > 100°C durchzuführen und Förderwasser gesondert im Kreislauf im Temperaturbereich < 100°C zu fahren.

Durch das erfindungsgemäße Verfahren und die Vorrichtung zur Durchführung des Verfahrens wird der Wasserverbrauch erheblich gesenkt, der Extraktgehalt im Extraktwasser auf > 12% erhöht und es werden Produkte mit Restgehalten an zyklischen Dimeren < 0,015% erhalten. Gleichzeitig wird eine hohe Energieeinsparung bei der Extraktrückgewinnung in der Anlage erzielt.

Im folgenden wird ein Ausführungsbeispiel des erfindungsgemäßen Verfahrens und der Vorrichtung zur Durchführung des Verfahens anhand der Zeichnung näher erläutert.

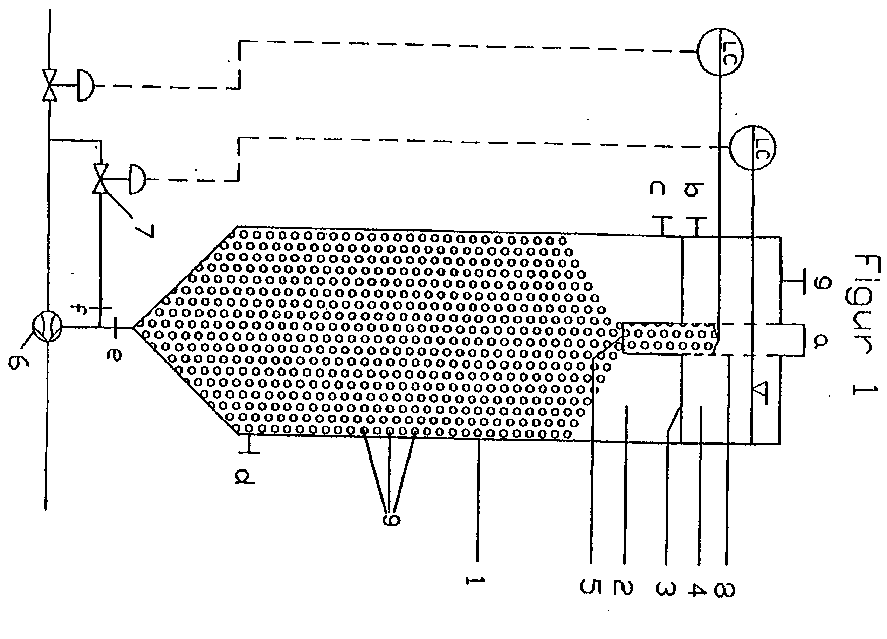

Die Figur 1 zeigt einen Extraktor für Granulat, in welchem die erfindungsgemäße Anordnung schematisch dargestellt wurde.

### Ausführungsbeispiel:

Die Extraktion von Polyamid 6-Granulat wird in einem kontinuierlich arbeitenden Extraktor 1 bei einem Druck von 2,0 bar, der über einen Stutzen für Inertgas g aufgebaut wird, durchgeführt.

Das Polyamidgranulat 9 gelangt durch den Eingangsstutzen a mittels hydraulischer Förderung in einem Wasserstrom in den Extraktor 1, durchläuft diesen von oben nach unten und wird dabei im Gegenstrom durch Heißwasser mit einer Temperatur von 130°C extrahiert. Das Granulat-Förderwassergemisch mit einer Temperatur von etwa 55°C gelangt in das Siebrohr 8, welches den Eingangsstutzen a im Förderwasserrraum 4 mit einer ebenen Trenneinrichtung 3 verbindet, wobei Förderwasser vom Granulat getrennt und über den Förderwasser-Austragsstutzen b in eine Förderwasserringleitung abgeleitet wird. Im Siebrohr 8 wird die Schütthöhe des Granulates 9 in Abhängigkeit des am unteren Ende des Extraktors 1 über den Granulataustragsstutzen e entnommenen Granulates, gesteuert über einen Strahlförderer 6, eingestellt. Mit extrahiertem Granulat wird hier Granulat bezeichnet, aus dem die Oligomeren und Monomeren soweit wie möglich extrahiert werden.

Ab der Trennvorrichtung 3 wird das Siebrohr 8 als durchgehendes Rohr mit gleichem Durchmesser, endend mit der Durchtrittsöffnung 5, in den Extraktwasserraum 2 geführt. Im oberen Teil des Extraktwasserraumes 2 wird das durch die Durchtrittsöffnung 5 in der Trenneinrichtung 3 eingetragene Granulat 9 auf eine Extraktionstemperatur von 130°C aufgeheizt, indem Extraktwasser mit einer Temperatur von 128°C aus dem Extraktwasser-Austragsstutzen c abgepumpt, auf 130°C aufgewärmt und über den Eintragsstutzen d dem unteren Teil des Extraktwasserraumes 2 zugeführt wird.

Durch den Eintragsstutzen d für Wasser zur Extraktion wird über eine Regulierungseinrichtung die Wassermenge mit einer Temperatur von 130°C eingetragen, wobei diese Menge gleich der Extraktwassermenge ist, die über den Extraktwasser-Austragsstutzen c den Extraktor 1 verläßt.

Der Querschnitt der Durchtrittsöffnung 5 und der Querschnitt des Granulataustragsstutzens e des Extraktors wird so dimensioniert, daß die Granulatpassiergeschwindigkeit 1/8 der Sinkgeschwindigkeit des Granulates 9 in ruhigem Wasser beträgt. Zur Vermeidung einer Wasserströmung innerhalb des durchgehenden Rohres der Durchtrittsöffnung 5 und im Granulataustragsstutzen e des Extraktors wird in den Wasserzuführungsstutzen f über die Wassermengenregulierung 7 eine derartige Menge an Wasser eingespeist, daß den Granulataustragsstutzen e passierend, nur extrahiertes Granulat dem Extraktor 1 entnommen, das Extraktwasser den Extraktwasserraum 2 ausschließlich über den Extraktoraustragsstutzen c verläßt, und gleichzeitig das Wasserniveau im Förderwasserraum 4 konstant gehalten wird.

Mittels Wasser wird durch den Strahlförderer 6 extrahiertes Granulat 9 aus dem Extraktor abgefördert.

Mit dem erfindungsgemäßen Verfahren und der Vorrichtung zur Durchführung des Verfahrens wird es möglich, Polyamid 6-Granulat 9 mit einem Restgehalt an zyklischen Dimeren bei nur 0,012% herzustellen.

Nach bekannten Extraktionsverfahren werden vergleichsweise Restgehalte an zyklischen Dimeren in Höhe von 0,03% erreicht.

### Übersicht über die verwendeten Bezugszeichen

- 1: Extraktor
- 2: Extraktwasserraum
- 3: Trenneinrichtung
- 4: Förderwasserraum
- 5: Durchtrittsöffnung
- 6: Strahlförderer
- 7: Wassermengenregulierung
- 8: Siebrohr
- 9: Granulat
- a: Eingangsstutzen
- b: Förderwasser-Austragsstutzen
- c: Extraktwasser-Austragsstutzen
- d: Eingangsstutzen für Wasser zur Extraktion
- e: Granulataustragsstutzen des Extraktors
- f: Wasserzuführungsstutzen
- g: Stutzen für Inertgas

## Patentansprüche

1. Verfahren zur kontinuierlichen Extraktion von polymeren Granulaten, insbesondere von Polyamid 6-Granulat, wobei Granulat mit Förderwasser in einen Extraktor eingebracht und Wasser als Extraktionsmittel von unten nach oben im Gegenstrom zum polymeren Granulat geführt wird,
**dadurch gekennzeichnet, daß** Granulat mit Förderwasser innerhalb eines unter Druck stehenden Extraktors in einem zum Extraktwasserraum abgegrenzten Förderwasserraum mittels Siebeinbauten oder üblichen kegligen Einbauten vom Förderwasser getrennt und dieses separat abgeleitet wird, während das Granulat kontinuierlich durch eine oder mehrere Durchtrittsöffnungen in einer Trenneinrichtung weiter in den Extraktwasserraum geführt wird, wobei an der Durchtrittsöffnung des Granulates zum Extraktwasserraum und an der Durchtrittsöffnung des Granulates in den Granulataustragsstutzen des Extraktors, durch Steuerung der Wassermengenzufuhr am Granulataustragsstutzen des Extraktors, anliegende Extraktwasser strömungsfrei gehalten und Granulat mit einem Restgehalt an zyklischen Dimeren < 0,015% mittels Wasser durch einen Strahlförderer kontinuierlich aus dem Extraktor ausgetragen wird.

2. Verfahren nach Anspruch 1,
**dadurch gekennzeichnet, daß** das Förderwasser im Temperaturbereich unter 100°C und das im Temperaturbereich über 100°C vorhandene Extraktwasser jeweils separat aus dem unter Druck stehenden Extraktor abgeführt werden und das Förderwasser dem Förderkreislauf wieder zugeführt wird.

3. Verfahren nach Anspruch 1 und 2,
**dadurch gekennzeichnet, daß** in der Durchtrittsöffnung oder den Durchtrittsöffnungen des Granulates vom Förderwasserraum in den Extraktwasserraum und in der Durchtrittsöffnung des Granulates in den Granulataustragsstutzen des Extraktors das anliegende Wasser strömungsfrei gehalten wird, indem in Abhängigkeit des Wasserniveaus im Förderwasserraum über eine Wassermengenregelung am Granulataustragsstutzen des Extraktors zusätzlich Wasser eingespeist und in dem Granulataustragsstutzen des Extraktors anliegendes Extraktwasser vor dem Strahlförderer mittels solcher präziser Wasserdosierung zurückgehalten wird.

4. Verfahren nach Anspruch 1 bis 3,
**dadurch gekennzeichnet, daß** die Durchtrittsöffnung beziehungsweise die Summe der Querschnitte der Durchtrittsöffnungen des Granulates vom Förderwasserraum in den Extraktwasserraum so dimensioniert werden, daß eine Granulatpassiergeschwindigkeit zwischen 1/5 und 1/10 der Sinkgeschwindigkeit des Granulates in ruhendem Wasser gewählt wird.

5. Vorrichtung zur Durchführung des Verfahrens nach Anspruch 1 bis 4,
**dadurch gekennzeichnet, daß** der Extraktor (1), der im oberen Teil einen Eingangsstutzen (a) für ein Granulat-Förderwasser-Gemisch in einen Förderwasserraum (4) und der einen Stutzen für Inertgas (g) aufweist, mittels einer Trenneinrichtung (3) in einen Förderwasserraum (4) mit Siebeinbauten oder kegligen Einbauten und einen Extraktwasserraum (2) getrennt ist und die Trenneinrichtung (3) eine Durchtrittsöffnung (5) oder mehrere Durchtrittsöffnungen am Grund von in den Extraktwasserraum (2) hineinreichenden, trichterförmigen Vertiefungen oder rohrartigen Gebilden aufweist, wobei der Querschnitt der Durchtrittsöffnung (5) oder -öffnungen für das Granulat (9) und der Querschnitt des Granulataustragsstutzens des Extraktors (e) auf eine Granulatpassiergeschwindigkeit zwischen 1/5 und 1/10 der Sinkgeschwindigkeit des Granulates (9) in ruhendem Wasser ausgelegt ist, und im Extraktwasserraum (2) im unteren Teil ein Eintragsstutzen für Wasser zur Extraktion (d) angeordnet ist, während Extraktwasserraum (2) und Förderwasserraum (4) jeweils einen gesonderten Extraktwasser-Austragsstutzen (c) und Förderwasser-Austragsstutzen (b) aufweisen und am Boden des Extraktors (e) der Granulataustragsstutzen des Extraktors (e) in Wirkverbindung zu einer Wassermengenregulierung (7) über den Wasserzuführungsstutzen (f) mit dem Strahlförderer (6) verbunden ist.

6. Vorrichtung nach Anspruch 5,
**dadurch gekennzeichnet, daß** die Trenneinrichtung (3) zwischen Förderwasserraum (4) und Extraktwasserraum (2) ein Boden mit mittig angeordneter Durchtrittsöffnung (5), die rohrförmig in den Extraktwasserraum hineingeführt ist, während ein vertikal verlaufendes, das Granulat-Förderwasser-Gemisch aufnehmendes Rohr innerhalb des Förderwasserraumes (4) als Siebrohr (8) ausgebildet ist, in die rohrförmige Durchtrittsöffnung (5) mündet.

## Claims

1. A method for the continuous extraction of polymer pellets, in particular polyamide 6 pellets, pellets being introduced with carriage water into an extractor and water being conveyed as extraction agent from bottom to top in countercurrent to the polymer pellets,
**characterised in that**, inside a pressurised extractor in a carriage water chamber separated from the extraction water chamber, pellets with carriage water are separated from said carriage water by means of screen fittings or conventional conical fittings and said carriage water is diverted separately, while the pellets are conveyed on into the extraction water chamber continuously through one or more passage openings in a partition means, wherein extraction water at the opening for passage of the pellets into the extraction water chamber and at the opening for passage of the pellets into the pellet discharge port of the extractor, by control of the quantity of water supplied to the pellet discharge port of the extractor, is kept flow-free and pellets with a residual content of cyclic dimers of < 0.015% are discharged continuously from the extractor by means of water by a jet conveyor.

2. A method according to claim 1,
**characterised in that** the carriage water in the temperature range of below 100°C and the extraction water present in the temperature range of above 100°C are in each case conveyed separately out of the pressurised extractor and the carriage water is fed back to the carriage water circuit.

3. A method according to claims 1 and 2,
**characterised in that** in the opening or openings for passage of the pellets from the carriage water chamber into. the extraction water chamber and the opening for passage of the pellets into the pellet discharge port of the extractor, the water present therein is kept free of flow, by additional feeding-in of water at the pellet discharge port of the extractor as a function of the water level in the carriage water chamber via a water quantity control means and holding back extraction water at the pellet discharge port of the extractor upstream of the jet conveyor by means of such precise water metering.

4. A method according to claims 1 to 3,
**characterised in that** the opening or the sum of the cross sections of the openings for passage of the pellets from the carriage water chamber into the extraction water chamber is so dimensioned that a pellet passage velocity of between 1/5 and 1/10 of the falling velocity of the pellets in stationary water is selected.

5. A device for performing the method according to claims 1 to 4,
**characterised in that** the extractor (1), which comprises in its upper part an inlet port (a) for inlet of a pellet/carriage water mixture into a carriage water chamber (4) and which comprises a port for inert gas (g), is separated by means of a partition means (3) into a carriage water chamber (4) with screen fittings or conical fittings and an extraction water chamber (2) and the partition means comprises a passage opening (5) or a plurality of passage openings at the base of funnel-shaped recesses or tubular structures extending into the extraction water chamber (2), wherein the cross section of the passage opening (5) or openings for the pellets (9) and the cross section of the pellet discharge port of the extractor (e) is designed for a pellet passage velocity of between 1/5 and 1/10 of the falling velocity of the pellets (9) in stationary water, and an inlet port for water for extraction (d) is arranged in the lower part of the extraction water chamber (2), while extraction water chamber (2) and carriage water chamber (4) in each case comprise a separate extraction water discharge port (c) and carriage water discharge port (b) and the pellet discharge portion of the extractor (e) is connected with the jet conveyor (6) at the bottom of the extractor (e) functionally with regard to a water quantity control means (7) via the water feed port (f).

6. A device according to claim 5,
**characterised in that** the partition means (3) between carriage water chamber (4) and extraction water chamber (2) a bottom with centrally disposed passage opening (5), which extends in tubular manner into the extraction water chamber, while a vertically extending tube receiving the pellet/carriage water mixture is constructed inside the carriage water chamber (4) as a screen tube (8), opens into the tubular passage opening (5).

## Revendications

1. Procédé d'extraction en continu de granulés de polymères, en particulier de granulés de polyamide 6, les granulés étant chargés dans un extracteur avec de l'eau d'alimentation et de l'eau étant dirigée de bas en haut à contre-courant par rapport aux granulés de polymères en tant que moyen d'extraction, **caractérisé en ce que** les granulés avec de l'eau d'alimentation à l'intérieur d'un extracteur sous pression dans une enceinte d'eau d'alimentation séparée de l'enceinte d'eau d'extraction sont séparés de l'eau d'alimentation par l'intermédiaire de structures filtrantes ou de chicanes coniques classiques et **en ce que** celle-ci est évacuée séparément, tandis que les granulés sont amenés en continu plus avant dans l'enceinte d'eau d'extraction en traversant une ou plusieurs ouvertures de passage aménagées dans un dispositif de séparation, dans lequel l'eau d'extraction présente au niveau de l'ouverture de passage des granulés vers l'enceinte d'eau d'extraction et au niveau de l'ouverture de passage des granulés dans la buse d'évacuation des granulés de l'extracteur demeure dans un état de non-écoulement, en commandant l'apport en volume d'eau au niveau de la buse d'évacuation des granulés de l'extracteur et dans lequel les granulés présentant une teneur résiduelle en dimères cycliques inférieure à 0,015 % sont évacués en continu hors de l'extracteur grâce à l'eau par un dispositif de transport à jets.

2. Procédé selon la revendication 1, **caractérisé en ce que** l'eau d'alimentation dans la gamme de températures inférieures à 100 °C et l'eau d'extraction présente dans la gamme de températures supérieures à 100°C sont évacuées respectivement séparément de l'extracteur sous pression et **en ce que** l'eau d'alimentation est réintégrée dans le circuit d'alimentation.

3. Procédé selon la revendication 1 ou 2, **caractérisé en ce que** l'eau présente dans l'ouverture de passage ou dans les ouvertures de passage des granulés, de l'enceinte d'eau d'alimentation vers l'enceinte d'eau d'extraction, et dans l'ouverture de passage des granulés dans la buse d'évacuation des granulés de l'extracteur demeure dans un état de non-écoulement, du fait qu'il est stocké davantage d'eau au niveau de la buse d'évacuation des granulés de l'extracteur par l'intermédiaire d'un dispositif de régulation du volume d'eau et en fonction du niveau d'eau présent dans l'enceinte d'eau d'alimentation, et **en ce que** l'eau d'extraction présente dans la buse d'évacuation des granulés de l'extracteur est retenue avant le dispositif de transport à jets au moyen d'un tel dispositif de dosage de l'eau précis.

4. Procédé selon les revendications 1 à 3, **caractérisé en ce que** l'ouverture de passage ou la somme des sections transversales des ouvertures de passage des granulés de l'enceinte d'eau d'alimentation à l'enceinte d'eau d'extraction sont dimensionnées de telle sorte qu'une vitesse de traversée des granulés est choisie entre 1/5 et 1/10 de la vitesse de descente des granulés dans l'eau calme.

5. Appareillage pour la mise en oeuvre du procédé selon les revendications 1 à 4, **caractérisé en ce que** l'extracteur (1), qui comporte dans la partie supérieure une buse d'admission (a) pour un mélange granulés-eau d'alimentation menant à une enceinte d'eau d'alimentation (4) et une buse pour gaz inerte (g), est séparé au moyen d'un dispositif de séparation (3) en une enceinte d'eau d'alimentation (4) par des structures filtrantes ou des chicanes coniques, et en une enceinte d'eau d'extraction (2), et **en ce que** le dispositif de séparation (3) comporte une ou plusieurs ouvertures de passage aménagées dans le fond de creux en forme d'entonnoirs ou d'éléments de type tuyaux débouchant dans l'enceinte d'eau d'extraction (2), dans lequel la section transversale de l'ouverture ou des ouvertures de passage (5) des granulés (9) et la section transversale de la buse d'évacuation des granulés (e) de l'extracteur (1) est déterminée par une vitesse de traversée des granulés comprise entre 1/5 et 1/10 de la vitesse de descente des granulés (9) dans l'eau calme, et **en ce qu'**est disposée une buse d'admission pour l'eau destinée à l'extraction (d) dans la partie inférieure de l'enceinte d'eau d'extraction (2), tandis que l'enceinte d'eau d'extraction (2) et l'enceinte d'eau d'alimentation (4) présentent respectivement une buse d'évacuation de l'eau d'extraction séparée (c) et une buse d'évacuation de l'eau d'alimentation (b) et, au niveau du fond de l'extracteur (1), la buse d'évacuation des granulés (e), activement reliée à un dispositif de régulation du volume d'eau (7), est raccordée au dispositif de transport à jets (6) via la buse d'amenée d'eau (f).

6. Dispositif selon la revendication 5, **caractérisé en ce que** le dispositif de séparation (3) présente, entre l'enceinte d'eau d'alimentation (4) et l'enceinte d'eau d'extraction (2), un fond pourvu d'une ouverture de passage (5) placée au centre qui s'introduit en forme de tuyau dans l'enceinte d'eau d'extraction, tandis qu'un tuyau recevant le mélange granulés-eau d'alimentation et s'étendant verticalement est conçu à l'intérieur de l'enceinte d'eau d'alimentation (4) sous la forme d'un tuyau-crible (8) et débouche dans l'ouverture de passage en forme de tuyau (5).
